(19) Europäisches Patentamt
European Patent Office
Office européen des brevets

(11) EP 1 388 493 B1

(12) EUROPÄISCHE PATENTSCHRIFT

(45) Veröffentlichungstag und Bekanntmachung des Hinweises auf die Patenterteilung:
**18.04.2007 Patentblatt 2007/16**

(51) Int Cl.:
***B64G 1/26*** *(2006.01)*

(21) Anmeldenummer: **03017816.4**

(22) Anmeldetag: **05.08.2003**

(54) **Verfahren zur treibstoffoptimalen Ansteuerung einer Düsenanordnung**

Method for the propellant-optimal regulation of a nozzle assembly

Méthode pour le contrôle optimal en propergols d'un ensemble de tuyères

(84) Benannte Vertragsstaaten:
**DE FR GB IT**

(30) Priorität: **08.08.2002 DE 10236570**

(43) Veröffentlichungstag der Anmeldung:
**11.02.2004 Patentblatt 2004/07**

(73) Patentinhaber: **EADS Astrium GmbH**
**81663 München (DE)**

(72) Erfinder:
- **Fischer, Horst-Dieter**
  **82008 Unterhaching (DE)**
- **Chemnitz, Joachim**
  **81739 München (DE)**

(74) Vertreter: **Ulrich, Thomas**
**c/o EADS Deutschland GmbH,**
**Patentabteilung**
**81663 München (DE)**

(56) Entgegenhaltungen:

| | |
|---|---|
| **EP-A- 0 750 239** | **WO-A-98/49058** |
| **US-A- 5 130 931** | **US-A- 5 310 143** |

- **CHAPMAN P, ZENTGRAF P, JAFRY Y: "Drag-Free Control Analysis and Algorithm Design for the STEP Mission" 5TH ESA INTERNATIONAL CONFERENCE ON SPACECRAFT GUIDANCE, NAVIGATION AND CONTROL SYSTEMS, [Online] 22. Oktober 2002 (2002-10-22), - 25. Oktober 2003 (2003-10-25) XP002348236 Frascati, Italien Gefunden im Internet: URL:http:// naca.central.cranfield.ac.uk/dc sss/2002/A01a_ chapman.pdf> [gefunden am 2005-10-07]**
- **KARMARKAR N: "A NEW POLYNOMIAL-TIME ALGORITHM FOR LINEAR PROGRAMMING" COMBINATORICA, AKADEMIA KIADA, IJMUIDEN, NL, Bd. 4, Nr. 4, 1984, Seiten 373-395, XP000747276 ISSN: 0209-9683**
- **BRONSTEIN I N ET AL: "LINEARE OPTIMIERUNG" TASCHENBUCH DER MATHEMATIK, 1989, Seiten 695-717, XP002070357**

EP 1 388 493 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur treibstoffoptimalen Ansteuerung einer Anordnung von Düsen an einem Raumfahrzeug.

Ein solches Verfahren ist beispielsweise aus US 6,347,262 B1 für den Fall eines spinstabilisierten Raumfahrzeuges bekannt. Eine Anordnung von Düsen an einem Raumfahrzeug, wie sie die vorliegende Erfindung betrachtet, dient insbesondere zur Bahn- und Lageregelung des Raumfahrzeuges. Eine solche Bahn- und Lageregelung durch Düsen ist beispielsweise aus EP 0 750 239 A2 bekannt.

Aus der EP 0 977 687, die alle Merkmale des Oberbegriffs des unabhängiges Anspruchs offenbart, ist ein spezielles Verfahren zur treibstoffoptimalen Ansteuerung einer Anordnung von Düsen an einem Raumfahrzeug bekannt, wobei zum Auffinden einer treibstoffoptimalen Lösung für die Ansteuerung die Lösung eines konvexen linearen Optimierungsproblems erfolgt mit

- einer Initialisierungsphase zum Auffinden einer ersten zulässigen Lösung des linearen Optimierungsproblems und

- einer anschließenden Iterationsphase, in der ausgehend von der zulässigen Lösung des linearen Optimierungsproblems eine iterative Optimierung eines Gütekriteriums erfolgt.

Es wird bei diesem Verfahren ein dualer Simplexalgorithmus angewendet, der durch ein weitgehend ungerichtetes Suchverfahren eine möglichst optimale Lösung für das Problem finden soll, wobei es aber bei diesem Verfahren vorkommen kann, dass es für einen aktuell vorliegenden Kräfte-Momenten-Vektor und die vorliegende Düsenanordnung keine Lösung gibt.

Aus N.Karmakar: A new polynominal time algorithm for linear programming, Combinatorica 4 (4), 1984, S. 373 - 395 ist ein grundsätzliches Verfahren zur Lösung linearer Optimierungsprobleme in allgemeiner Form bekannt.

Aufgabe der vorliegenden Erfindung ist es, ein Verfahren zur treibstoffoptimalen Ansteuerung einer Anordnung von Düsen an einem Raumfahrzeug bereitzustellen, das eine zielgerichtete Suche einer auf jeden Fall zulässigen Lösung des linearen Optimierungsproblems erlaubt. Diese Aufgabe wird gelöst durch die Merkmale des Patentanspruchs 1.

Die vorliegende Erfindung betrifft ein Verfahren zur treibstoffoptimalen Ansteuerung einer Anordnung von Düsen an einem Raumfahrzeug, wobei zum Auffinden einer treibstoffoptimalen Lösung für die Ansteuerung die Lösung eines linearen Optimierungsproblems, insbesondere eines konvexen linearen Optimierungsproblems, erfolgt mit

- einer Initialisierungsphase zum Auffinden einer ersten zulässigen Lösung des linearen Optimierungsproblems und

- einer anschließenden Iterationsphase, in der ausgehend von der zulässigen Lösung des linearen Optimierungsproblems eine iterative Optimierung eines Gütekriteriums erfolgt.

Gemäß der Erfindung ist nun vorgesehen, dass

- bei jedem Iterationsschritt die Bildung eines skalierten Iterationsgradienten erfolgt und

- der Iterationsgradient mit einem Begrenzungsfaktor für eine maximale Iterationsschrittweite multipliziert wird, welcher unter Berücksichtigung mindestens einer Randwertbedingung für eine zulässige Lösung gebildet wird.

Durch die Anwendung eines skalierten Iterationsgradienten im Gegensatz zu einem bloßen Suchverfahren wie beim Stand der Technik kann ein gerichtetes Auffinden der optimalen Lösung erfolgen. Bei der Bildung des skalierten Iterationsgradienten kann insbesondere wiederum mindestens eine Randwertbedingung für eine zulässige Lösung mit einfließen. Es kann mit der Anwendung eines skalierten Iterationsgradienten auch weitgehend ausgeschlossen werden, dass eine nur suboptimale Lösung des linearen Optimierungsproblems gefunden wird. Dass es sich bei linearen Problemen insbesondere um ein sogenanntes konvexes Problem handeln kann, ist prinzipiell bereits bekannt, siehe beispielsweise das Kapitel "Linear Programming" unter dem folgenden Internet-Link der European Business School der Universität Schloss Reichartshausen:
http://www.ebs.de/Lehrstuehle/Wirtschaftsinformatik/NEW/Courses/Semester2/Ma th2/.

Durch die Berücksichtigung der Randwertbedingungen im Rahmen des Begrenzungsfaktors wird erreicht, dass als jeweils nächste Iterationslösung wiederum eine Lösung bestimmt wird, die innerhalb eines zulässigen Wertebereiches liegt, da durch den Begrenzungsfaktor die Iterationsschrittweite entsprechend angepasst werden kann, so dass eine Randwertbedingung nicht verletzt wird. Durch eine mögliche Berücksichtigung der Randwertbedingungen im Rahmen der Bildung des skalierten Iterationsgradienten kann insbesondere erreicht werden, dass die Gradientenrichtung möglichst weitgehend so gewählt wird, dass als jeweils nächste Iterationslösung wiederum eine Lösung bestimmt wird, die innerhalb eines zulässigen Wertebereiches liegt.

Für die hier vorliegenden linearen Optimierungsprobleme ist überdies bekannt, dass die optimale, zulässige Lösung, die einem Koordinatenpunkt in einem durch Randbedingungen begrenzten mehrdimensionalen Raum aller zulässigen Lösungen entspricht, auf dem Rand dieses begrenzten Raumes liegt. Damit werden der skalierte Iterationsgradient und der Begrenzungsfaktor bevorzugt so angepasst, dass eine iterative Annäherung an einen optimalen Punkt auf der Begrenzung des mehrdimensionalen Raumes der zulässigen Lösungen erfolgt.

Es kann nun insbesondere vorgesehen werden, dass als eine Randwertbedingung eine obere Grenze (upper bound) für eine zulässige Lösung definiert wird.

Weiterhin kann bevorzugt vorgesehen werden, dass die Bestimmung des Iterationsgradienten mit Hilfe einer Gauß-Elimination erfolgt, was ein sehr schnelles Verfahren darstellt.

Es kann auch insbesondere vorgesehen werden, dass in jedem Iterationsschritt eine Skalierung des Iterationsgradienten derart erfolgt, dass eine Gradientenkomponente umso kleiner ausfällt, je näher die entsprechende Komponente des Ergebnisses des vorherigen Iterationsschrittes einer Randwertbedingung kommt. Es wird damit in jedem Iterationsschritt eine neue Skalierung des Iterationsgradienten durchgeführt, wobei gewisse Komponenten des Gradienten verschwinden, wenn die entsprechenden Komponenten der vorherigen Iterationslösung einer Randwertbedingung sehr nahe kommen, d.h. beispielsweise kleiner als ein erstes vordefiniertes Abstandsmaß werden. Dieses erste Abstandsmaß kann auch infinitesimal klein gewählt werden.

Weiterhin kann vorgesehen werden, dass die Iterationsphase entweder dann beendet wird, sobald das Ergebnis eines Iterationsschrittes mindestens eine Randwertbedingung überschreitet und dass das Ergebnis des vorherigen Iterationsschrittes als optimale Lösung des Gütekriteriums bestimmt wird. Es wird also die Iteration dann abgebrochen, wenn der Algorithmus das Gebiet der zulässigen Lösungen verlassen würde, und die letzte zulässige Lösung wird als optimale Lösung bestimmt. Damit wird auf einfache Weise garantiert, dass in jedem Fall eine möglichst optimale und zugleich zulässige Lösung als Endergebnis des Verfahrens bestimmt wird.

Es kann die Iterationsphase aber auch dann beendet werden, sobald das Iterationsverfahren gegen eine zulässige Lösung konvergiert und sich das Ergebnis eines bestimmten Iterationsschrittes von dem Ergebnis eines vorhergehenden Iterationsschrittes um weniger als ein zweites vordefiniertes Abstandsmaß unterscheidet, wobei das Ergebnis des letzten Iterationsschrittes als optimale Lösung des Gütekriteriums bestimmt wird.

Nachfolgend wird ein spezielles Ausführungsbeispiel der vorliegenden Erfindung erläutert.

Es wird ein Verfahren zur treibstoffoptimalen Ansteuerung einer Anordnung von Düsen an einem Raumfahrzeug betrachtet, welches zur Bahn- und Lageregelung des Raumfahrzeuges verwendet wird. Zur Erzeugung von Kräften und Momenten auf einem Raumfahrzeug, beispielsweise um simultan Translation und Rotation während einer Andockphase oder einer sonstigen Bahn- und Lageregelung regeln zu können, sind $n \geq 7$ Düsen notwendig. Die zugehörigen Ansteuersignale müssen den Restriktionen genügen

- positiv zu sein
- kleiner einem Maximalwert (i.a. gleich 1) zu sein

Darüber hinaus kann bei mehr als 7 Düsen zusätzlich ein Gütekriterium, das i.a. dem Treibstoffverbrauch entspricht, optimiert werden.

Die mathematische Formulierung führt damit auf das folgende lineare Optimierungsproblem (LOP):

Gesucht: Düsenansteuerung a, für die gilt

$$\text{(a)} \qquad 0 \leq a \leq f$$

wobei

a: Ansteuervektor

f: Vektor, der die Maximalwerite der a; enthält

g: Vektor der Gewichtsfaktoren

$$T_C = \left( \frac{f_1, \ldots, f_n}{t_{c1}, \ldots, t_{cn}} \right):$$

Kraft- und Monentenmatrix

r: Vektor, der die geforderten Kräfte und Momente enthält

Zur Anwendung aller LOP Lösungsverfahren muss in einer Initialisierungsphase zunächst eine zulässige Lösung gefunden, d.h. ein Vektor $a_z$, der (1a) und (1b) erfüllt. Mit der sogenannten Singulärwertzerlegung (singular value decomposition, kurz SVD) von

$$T_c = V \Sigma U_1^T$$

mit

$$\left.\begin{array}{l} V: \\ U = (U_1, U_2): \end{array}\right\} \text{orthogonale Matrizen}$$

$$\rightarrow T_c U_2 = 0$$

$$\Sigma = \text{diag } \sigma_i > 0: \quad \text{Diagonalmatrix der Singulärwerte}$$

lassen sich alle Lösungen von (1b) angeben als

$$\begin{aligned} a_0 &= U_1 \underbrace{\Sigma^{-1} V^T r}_{} + \underbrace{U_2 c}_{} \\ (2) \qquad &=: U_1 \; s + v \end{aligned}$$

Aus (2) sieht man folgendes:

(i) zur Realisierung von beliebigen Kräften und Momenten müssen alle $\sigma_i$ größer null sein, d.h. $T_c$ vollen Rang haben

(ii) der erste Summand ist durch r vollständig bestimmt und stellt die Lösung mit minimaler Norm von (1b) dar

(iii) der zweite Summand mit dem noch zu bestimmenden Vektor c dient zur Erfüllung der Randbedingung (1a) und zur Minimierung von (1c)

Aus der Tatsache, dass mit dem Düsensatz sowohl positive wie negative r realisierbar sein müssen, folgt aus (2), dass es $c_1$ und $c_2$ geben muss, so dass

$$\begin{aligned} &(a) \quad a_1 := U_1 s_1 + U_2 c_1 \geq 0 \\ &(b) \quad a_2 := U_1 (-s_1) + U_2 c_2 \geq 0 \end{aligned}$$

(3)

$$(c) \rightarrow U_2 (c_1 + c_2) =: U_2 c_p > 0$$

d. h. die Existenz beliebig vieler Vektoren $C_p$ mit

$$(4) \qquad v_p = U_2 c_p > 0$$

gesichert ist. Nach Wahl eines bestimmten (a priori fixierbaren) $v_p$ läßt sich somit $a_0$ positiv machen gemäß

$$(5) \quad \begin{aligned} &(a) \quad a_0 = U_1 s + v_p k_1 \geq 0, \\ &(b) \quad k_1 = \max_i \frac{(-U_1 s)i + \varepsilon}{vp_i}, \quad \varepsilon \approx 0.04 > 0 \end{aligned}$$

wobei ε aus numerischen Gründen für die Anwendung der nachfolgenden Optimierungsschritte eingeführt wurde.

Für große rechte Seiten r kann es vorkommen, dass (1a, b) keine Lösung $a \leq f$ hat, es wird daher das um $x_s$ erweiterte Problem betrachtet

$$(6) \quad \begin{aligned} &(a) \quad T_c\, a = r\,(1 - x_s), \qquad (b) \quad 0 \leq a \leq f, \; 0 \leq x_s \leq 1 \\ &(c) \rightarrow (T_c, r) \begin{pmatrix} a \\ x_s \end{pmatrix} = r \\ &(d) \quad g^T a + g_s x_s \rightarrow \min \\ &(e) \quad g_s \geq g^T f, \quad \text{damit } x_s \text{ zu null wird, falls r nicht zu groß ist} \end{aligned}$$

Damit lässt sich nun auch die obere Begrenzung einhalten und der gesuchte zulässige Startwert für a berechnen zu

$$(7) \quad \begin{aligned} &(a) \quad a_z = a_0\,(1 - x_{sz}) = U_1 s\,(1 - x_{sz}) + v_p k_1\,(1 - x_{sz}) \\ &(b) \quad x_{sz} = \begin{cases} w, & w > 0 \\ 0, & w \leq 0 \end{cases} \\ &(c) \quad w = \max_i \left\{ 1 - \frac{f_i - \varepsilon}{a_{0i}} \right\} \end{aligned}$$

ε stellt hier ein erstes, beispielsweise infinitesimales Abstandsmaß dar.

Alle folgenden Betrachtungen beziehen sich auf das erweiterte System (6), wobei aber die ursprüngliche Bezeichnung nach (1) der Einfachheit halber beibehalten wird.

Zur Lösung des LOPs erfolgt nun ein zweiter Verfahrensschritt, nämlich eine Optimierung des Gütekriteriums (1c) bzw. (6d), die iterativ wie folgt durchgeführt wird:

$$\begin{aligned} a_{i+1} &= a_i - \underbrace{D_i\, U_2^{(i)}\, U_2^{(i)T}\, D_i\, g}\cdot k \\ &= a_i - \qquad v_{gi} \cdot k \end{aligned}$$

Dabei stellt $v_{gi}$ den Iterationsgradienten dar, der in jedem Iterationsschritt skaliert wird, d.h. es wird in jedem Iterationsschritt die Gradientenrichtung neu bestimmt. Weiterhin stellt k einen Begrenzungsfaktor für die Iterationsschrittweite dar,

der wie folgt bestimmt wird:

$$(8)\quad \begin{aligned} &(b)\quad k = \min(k_U, k_0)(1-\varepsilon) \\ &(c)\quad k_o = \min_{v_{gi}^{(j)}<0}\left(\frac{a_i^{(j)} - fj}{v_{gi}^{(j)}}\right); \quad k_u = \min_{v_{gi}^{(j)}>0}\left(\frac{a_i^{(j)}}{v_{gi}^{(j)}}\right) \end{aligned}$$

Diese Wahl von k unter Berücksichtigung der Randwertbedingung $0 \leq a \leq f$ sichert, dass $a_{i+1}$ zulässig bleibt.

$$D_i = diag\left[a_i^{(j)}\left(1-\frac{a_i^{(j)}}{f_j}\right)\right], j = 1,..,n+1$$

$$U_2^{(i)}: \quad \text{Nullraumvektoren von } T_cD_i = V^{(i)}\,\Sigma^{(i)}\,U_1^{(i)T}$$

$a_1 = a_z$, berechnet nach (7)

Die wesentliche Idee in (8) ist die ständige Skalierung des Problems mit D; und das anschließende Fortschreiten in die so modifizierte, auf $U_2^{(i)}$ projizierte negative Gradientenrichtung, womit aufgrund der bekannten Struktur des Problems als konvexes lineares Optimierungsproblem mit einer optimalen Lösung auf dem Rand garantiert wird, dass das Gütekriterium in jedem Iterationsschritt reduziert wird. Die Iteration wird bevorzugt dann abgebrochen, wenn der Betrag von $v_{gi} \cdot k$ eine vorgegebene Schranke als zweites Abstandsmaß unterschreitet, d.h. a; sich kaum noch ändert.

Eine besondere Erweiterung des vorliegenden Verfahrens gegenüber dem Vorgehen bei Karmakar besteht darin, dass ein zusätzliches Randwertproblem mit in jedem Iterationsschritt berücksichtigt wird, hier das Einbeziehen der oberen Grenze f (upper bound problem) durch Hinzunahme des 2. Faktors in D; und Berücksichtigung der oberen Grenze f im Rahmen des Termes $k_0$ in der Berechnung von k nach (8b). Bislang wurden bei Karmakar-Verfahren üblicherweise komplexe Erweiterungen des linearen Optimierungsproblems um Schlupfvariablen vorgesehen mit dem Nachteil, dass sich dann die Dimension des zu lösenden Problems deutlich erhöht. Hier stellt das vorliegende Verfahren eine wesentliche Vereinfachung dar. Außerdem entfällt die bei Karmakar sehr aufwändige Bestimmung einer zulässigen Lösung in der Initialisierungsphase durch die hier vorgeschlagene, dem hier vorliegenden Problem besser angepasste Initialisierungsphase.

Ein weiterer vorteilhafter Verfahrensschritt des hier beschriebenen Verfahrens liegt also in der laufenden Berechnung der $v_{gi}$, die bevorzugt nicht über die SVD von $T_cD_i$ erfolgt, sondern wegen (benutzt wird hier die folgende, vereinfachte Darstellung: $T_c$ für $T_cD_i$, D für $D_i$)

(9)

(a) $M = T_c T_c^T = V \Sigma^2 V^T$

$\rightarrow$

(b) $U_1 U_1^T = T_c^T M^{-1} T_c$

$$v_g = D\, U_2 U_2^T Dg = D(I - \underbrace{U_1 U_1^T) Dg}_{b}$$

(c)

$$= D\,(I - T_c^T M^{-1} T_c)\, b$$

$$= D\,(b - T_c^T x)$$

mit

(d) $Mx = T_c b$

über die Lösung von (9d) für x mittels einer Gauß-Elimination erfolgt. Dieses Verfahren ist deutlich schneller als eine SVD. Ebenso wird für $a_0$ auch $U_1$ nicht ermittelt, sondern $U_1 s$ direkt berechnet gemäß

$$U_1 s = U_1\, \Sigma^{-1}\, V^T\, r = T_c^T\, M^{-1}\, r$$

Somit besteht das Verfahren in der Ausführung der Rechenschritte

- Glg (5) mit (9e) } Initialisierung
- Glg (7) } Initialisierung
- Glg (8) mit (9c, d) } Iteration

Abschließend sind weitere Vorteile des vorgeschlagenen Verfahrens gegenüber einem Simplex-Verfahren nach dem Stand der Technik zusammengestellt:

- eine Berechnung einer zulässigen Lösung kann mit minimalem Aufwand erfolgen, (sogar $a_z$ könnte bereits als Düsenansteuerung benutzt werden, wäre allerdings nicht treibstoffoptimal).
- die anschließende Optimierung kann gegebenenfalls auf wenige Schritte begrenzt werden, wenn z.B. die Leistung des Bordrechners begrenzt ist.
- die Erfahrungen zeigen, dass das Optimum im Mittel mit erheblich weniger Rechenoperationen erreicht wird und generell weniger Speicheraufwand benötigt als bei einem Simplex-Verfahren.
- bei einem Düsenausfall ist $T_c$ lediglich um die entsprechende Spalte zu reduzieren und ein entsprechender Vektor $v_P$ abzuspeichern, d.h. es ist in diesem Fall nur ein minimaler zusätzlicher Speicherbedarf erforderlich, im Gegensatz zum Stand der Technik.
- durch die Einbeziehung des upper bound problems werden in der Praxis Probleme besonders bei begrenzter Düsenstellkapazität vermieden.

## Patentansprüche

1. Verfahren zur treibstoffoptimalen Ansteuerung einer Anordnung von Düsen an einem Raumfahrzeug, wobei zum Auffinden einer treibstoffoptimalen Lösung für die Ansteuerung die Lösung eines linearen Optimierungsproblems erfolgt mit

- einer Initialisierungsphase zum Auffinden einer ersten zulässigen Lösung des linearen Optimierungsproblems und
- einer anschließenden Iterationsphase, in der ausgehend von der zulässigen Lösung des linearen Optimierungsproblems eine iterative Optimierung eines Gütekriteriums erfolgt,

**dadurch gekennzeichnet, dass**

- bei jedem Iterationsschritt die Bildung eines skalierten Iterationsgradienten erfolgt und
- der Iterationsgradient mit einem Begrenzungsfaktor für eine maximale Iterationsschrittweite multipliziert wird, welcher unter Berücksichtigung mindestens einer Randwertbedingung für eine zulässige Lösung gebildet wird.

**2.** Verfahren nach Anspruch 1, **dadurch gekennzeichnet, dass** als eine Randwertbedingung eine obere Grenze für eine zulässige Lösung definiert wird.

**3.** Verfahren nach einem der Ansprüche 1 oder 2, **dadurch gekennzeichnet, dass** die Bestimmung des Iterationsgradienten mit Hilfe einer Gauß-Elimination erfolgt.

**4.** Verfahren nach einem der Ansprüche 1 bis 3, **dadurch gekennzeichnet, dass** in jedem Iterationsschritt eine Skalierung des Iterationsgradienten derart erfolgt, dass eine Gradientenkomponente umso kleiner ausfällt, je näher die entsprechende Komponente des Ergebnisses des vorherigen Iterationsschrittes einer Randwertbedingung kommt.

**5.** Verfahren nach einem der Ansprüche 1 bis 4, **dadurch gekennzeichnet, dass** die Iterationsphase beendet wird, sobald das Ergebnis eines Iterationsshrittes mindestens eine Randwertbedingung überschreitet und dass das Ergebnis des vorherigen Iterationsschrittes als optimale Lösung des Gütekriteriums bestimmt wird.

**6.** Verfahren nach einem der Ansprüche 1 bis 4, **dadurch gekennzeichnet, dass** die Iterationsphase beendet wird, sobald das Iterationsverfahren gegen eine zulässige Lösung konvergiert und sich das Ergebnis eines bestimmten iterationsschrittes von dem Ergebnis eines vorhergehenden Iterationsschrittes um weniger als ein vordefiniertes Abstandsmaß unterscheidet, wobei das Ergebnis des letzten Iterationsschrittes als optimale Lösung des Gütekriteriums bestimmt wird.

## Claims

**1.** A method for the fuel-optimal control of an arrangement of thrusters on a spacecraft, a linear optimisation problem being carried out in order to find a fuel-optimal solution for the control, with

- an initialisation phase to find a first permissible solution of the linear optimisation problem and
- a subsequent iteration phase, in which an iterative optimisation of a quality criterion is carried out on the basis of the permissible solution of the linear optimisation problem,

**characterised in that**

- a scaled iteration gradient is formed in each iteration step and
- the iteration gradient is multiplied by a limiting factor for a maximal iteration increment, which is formed by taking into account at least one boundary-value condition for a permissible solution.

**2.** A method according to claim 1, **characterised in that** an upper bound for a permissible solution is defined as a boundary-value condition.

**3.** A method according to claim 1 or 2, **characterised in that** the iteration gradient is determined with the aid of a Gaussian elimination.

**4.** A method according to one of claims 1 to 3, **characterised in that** the iteration gradient is scaled in each iteration step so that a gradient component becomes commensurately smaller as the corresponding component of the result of the preceding iteration step becomes closer to a boundary-value condition.

**5.** A method according to one of claims 1 to 4, **characterised in that** the iteration phase is terminated as soon as a result of an iteration step exceeds at least one boundary-value condition, and **in that** the result of the preceding iteration step is determined as an optimal solution of the quality criterion.

**6.** A method according to one of claims 1 to 4, **characterised in that** the iteration phase is terminated as soon as the iteration method converges towards a permissible solution and the result of a particular iteration step differs from the result of a preceding iteration step by less than a predefined distance measure, the result of the last iteration step being determined as an optimal solution of the quality criterion.

**Revendications**

**1.** Procédé pour la commande optimale en propergol d'un dispositif de tuyères sur un engin spatial, selon lequel, pour trouver une solution de commande optimale en propergol, on résout un problème d'optimisation linéaire avec :

- une phase d'initialisation pour trouver une première solution admissible au problème d'optimisation linéaire, et
- une phase d'itération suivante dans laquelle a lieu une optimisation itérative d'un critère de qualité à partir de la solution admissible du problème d'optimisation linéaire,

**caractérisé en ce qu'**

- on forme un gradient d'itération échelonné à chaque étape d'itération, et
- on multiplie le gradient d'itération avec un coefficient de limitation d'un pas de progression maximal d'itération, coefficient formé en tenant compte d'au moins une condition de valeur marginale pour obtenir une solution admissible.

**2.** Procédé selon la revendication 1,
**caractérisé en ce qu'**
on définit une limite supérieure comme condition de valeur marginale pour obtenir une solution admissible.

**3.** Procédé selon l'une quelconque des revendications 1 ou 2,
**caractérisé en ce que**
les gradients d'itération sont déterminés à l'aide d'une élimination de Gauß.

**4.** Procédé selon l'une quelconque des revendications 1 à 3,
**caractérisé en ce qu'**
à chaque étape d'itération, une mise à l'échelle des gradients d'itération a lieu de manière à ce qu'une composante de gradient soit d'autant plus petite que la composante correspondante du résultat de l'étape d'itération précédente se rapproche d'une condition de valeur marginale.

**5.** Procédé selon l'une quelconque des revendications 1 à 4,
**caractérisé en ce que**
la phase d'itération se termine dès que le résultat d'une étape d'itération dépasse au moins une condition de valeur marginale, et on détermine le résultat de l'étape d'itération précédente en tant que solution optimale du critère de qualité.

**6.** Procédé selon l'une quelconque des revendications 1 à 4,
**caractérisé en ce que**
la phase d'itération se termine dès que le procédé d'itération converge vers une solution admissible et que le résultat d'une certaine étape d'itération diffère du résultat d'une étape d'itération précédente d'une valeur inférieure à une distance prédéfinie, le résultat de la dernière étape d'itération étant déterminé en tant que solution optimale du critère de qualité.